## Europäisches Patentamt

## European Patent Office

## Office européen des brevets

(19)

(11) Veröffentlichungsnummer: **0 179 827**

**B1**

(12) # EUROPÄISCHE PATENTSCHRIFT

(45) Veröffentlichungstag der Patentschrift:
**02.08.89**

(51) Int. Cl.⁴: **E 05 D  15/58**

(21) Anmeldenummer: **85901978.8**

(22) Anmeldetag: **19.04.85**

(86) Internationale Anmeldenummer:
**PCT/DE 85/00129**

(87) Internationale Veröffentlichungsnummer:
**WO 85/04926 (07.11.85 Gazette 85/24)**

(54) **WAHLWEISE IM SCHIEBE- ODER-SCHWENKBETRIEB BEDIENBARE FAHRZEUGTÜR.**

(30) Priorität: **19.04.84  DE 3414890**

(43) Veröffentlichungstag der Anmeldung:
**07.05.86 Patentblatt 86/19**

(45) Bekanntmachung des Hinweises auf die Patenterteilung:
**02.08.89 Patentblatt 89/31**

(84) Benannte Vertragsstaaten:
**AT BE CH DE FR GB IT LI LU NL SE**

(56) Entgegenhaltungen:
**DE-A-1 919 990**
**DE-A-2 105 658**
**DE-B-1 148 460**
**DE-B-1 240 440**
**DE-B-2 448 462**
**US-A-1 992 830**
**US-A-3 201 169**

(73) Patentinhaber: **Koch, Hermann, Mühlenweg 7,
D-7483 Inzighofen 3 (DE)**

(72) Erfinder: **Koch, Hermann, Mühlenweg 7, D-7483
Inzighofen 3 (DE)**

(74) Vertreter: **Schuster, Gregor, Dipl.- Ing.,
Patentanwälte Schuster & Thul
Wiederholdstrasse 10, D-7000 Stuttgart 1 (DE)**

EP 0 179 827 B1

## Beschreibung

Die Erfindung geht aus von einer Vorrichtung zum Öffnen und Schließen von Fahrzeugtüren nach der Gattung des Hauptanspruchs.

Bei einer bekannten Vorrichtung dieser Art (DE-A-2 105 658) ist ein zweigliedriges Hebelwerk vorgesehen, das einerseits an der Karosserie des Fahrzeugs schwenkbar angeschlagen ist und andererseits eine mit Zahnrädern versehene Achse aufweist, die den Führungsschienen der Fahrzeugtür als Führungselemente verschiebbar sind. Die Zahnräder greifen in Zahnstangen, wobei durch das paarweise Anordnen von Zahnrädern eine Parallelführung erzielt wird. Abgesehen davon, daß diese Parallelführung sehr ungenau und mit viel Spiel verbunden ist, so daß eine Beschädigung der Karosserie durch die Fahrzeugtür besteht, ist diese Vorrichtung außerordentlich aufwendig. Die offene und unbestimmte kinematische Kette in Form des zweigliedrigen Hebels macht die Zahnrad- und Zahnstangenkonstruktion erforderlich mit den dadurch gegebenen Nachteilen. Ein weiterer Nachteil besteht darin, daß die Tür verhältnismäßig umständlich von Schwenk- in Schiebefunktion umgestellt werden kann, also unter Hinzunahme der zweiten Hand, wobei bei einer ungeschickten Handhabe beim Schließvorgang der Tür aus der Schiebefunktion heraus zuerst die angeschlagene Seite einschiebbar und danach die freie Seite einrastbar ist, mit der Gefahr, daß die Karosserie beschädigt wird und der Schloßriegel nicht richtig einrastet.

Der Erfindung liegt die Aufgabe zugrunde, eine Vorrichtung zum Öffnen und Schließen von Fahrzeugtüren der eingangs genannten Art zu entwickeln, die unter Vermeidung der Nachteile der bekannten Vorrichtung von der einen in die andere Funktionsstellung verstellbar und außerdem leicht öffenbar ist und bei der die Hebelelemente und die Führung eine reibungslose Verschiebung gewährleisten.

Diese Aufgabe wird durch die erfindungsgemäße Vorrichtung zum Öffnen und Schließen von Fahrzeugtüren mit den kennzeichnenden Merkmalen des Hauptanspruchs gelöst.

Weitere Merkmale der Erfindung sind Gegenstand der abhängigen Ansprüche 2 bis 14.

Die erfindungsgemäße Vorrichtung den Vorteil, daß sie sich nachträglich in Serienfahrzeuge einbauen läßt, ohne daß wesentliche Veränderungen an der Karosserie erforderlich sind.

Es können beide Vordertüren, oder auch nur eine Vordertür umgerüstet werden. Dabei ist ein wichtiges Anwendungsgebiet das benutzungsfreundliche Gestalten von Fahrzeugen für Behinderte, die beispielsweise mit einem Rollstuhl an das Fahrzeug heranfahren, dann vom Rollstuhl in das Fahrzeug gelangen und anschließend den Rollstuhl am Fahrzeug verstauen.

Die erfindungsgemäße Vorrichtung ist jedoch nicht nur bei speziell für Behinderte umgerüsteten Fahrzeugen vorteilhaft, sondern sie ermöglicht ein Einsteigen und/oder Verlassen des Fahrzeugs in Situationen, in denen Verkehr oder Raummangel ein weites Ausschwenken einer Tür nicht zulassen. Dabei verringert die Möglichkeit, die Tür auch im Schiebebetrieb zu benutzen, in keiner Weise die Sicherheit des Fahrzeuges, denn auch bei Verformung der zum Schiebebetrieb erforderlichen Teile kann die Tür wie eine normale Fahrzeugtür betätigt werden. Die mit der erfindungsgemäßen Vorrichtung umgerüstete Fahrzeugtür greift ebenfalls an den serienmäßig an der Karosserie befindlichen Widerlagern für die Türen an. Damit wirken alle in der serienmäßigen Ausstattung des Fahrzeugs vorgesehenen konstruktiven Maßnahmen zur Erhöhung der passiven Sicherheit des Fahrzeuges. So sind in einfacher Weise auch Umrüstungen zu Sicherheitsfahrzeugen möglich.

Durch das nur mittelbare Anbringen der Elemente des Hebelwerkes mittels eines Zwischenstücks, das an der Karosserie in Türöffnungsrichtung schwenkbar befestigt ist, wird vorteilhafterweise eine besonders günstige konstruktive Gestaltung des Hebelwerkes ermöglicht, bei dem Hebellängen nun nicht mehr durch den Abstand zwischen Karosserie und den Angriffspunkten an der Fahrzeugtür vorgegeben sind, sondern die Hebellängen des Hebelwerkes sind durch die Gestaltung des Zwischenstücks für einen optimalen Bewegungsablauf beim Schiebebetrieb der Fahrzeugtür dimensionierbar. Und dieses auch dann, wenn das Zwischenstück an die serienmäßig am Fahrzeug vorhandenen Teile des Scharniergelenks für eine Fahrzeugtür angebracht wird.

Eine weitere vorteilhafte Ausführungsform der Erfindung besteht darin, daß an der Fahrzeugtür eine Hauptführungsschiene und an der Türschwelle der Karosserie eine Stützführungsschiene angebracht sind, von denen Führungselemente längsbeweglich geführt werden und daß das mit der Stützführungsschiene zusammenwirkende Führungselement für den Schiebebetrieb der Fahrzeugtür mittels der Betätigungsvorrichtung mit der Stützführungsschiene in Eingriff zu bringen ist. Dadurch, daß das auf der Stützführungsschiene gleitende Führungselement nur dann mit der Stützführungsschiene zusammenwirkt, wenn mittels der Betätigungsvorrichtung auf Schiebebetrieb für die Fahrzeugtür umgeschaltet worden ist, ergeben sich keine Behinderungen beim Bedienen der Tür oder beim Ein- und Aussteigen und keine Konstruktionselemente, welche die passive Sicherheit der Fahrzeugtür herabsetzen.

Eine vorteilhafte Ausführungsform des erfindungsgemässen Hebelwerkes besteht darin, daß das Hebelwerk aus einem Parallelogrammhebeltrieb und einem Hebeltrieb nach Art eines Geradschubkurbeltriebes besteht, wobei das längsverschiebbare Element des Geradschubkurbeltriebes das auf der Stützführungsschiene laufende Führungselement darstellt und der Parallelogrammhebeltrieb das Zwischenstück mit dem auf der Hauptführungsschiene längsbeweglichen Führungselement verbindet. In einer bestimmten Phase arbeitet das Hebelwerk als sechsgliedrige kinematische Kette (nach Stephenson). Die Länge der beiden parallel wirkenden Hebel des Parallelogrammhebeltriebes, die mit der wirksamen Länge des in Art des Pleuels des Kurbeltriebes wirkenden Hebels des Geradschubkurbeltriebes korrespondiert, bedingt, um welchen Abstand die Fahrzeugtür im Schwenkbetrieb nach außen ausgelenkt wird. Dadurch, daß die Hebel des Parallelogrammhebeltriebes am Zwischenstück und nicht unmittelbar an der Karosserie angreifen, ist es in vorteilhaft einfacher Weise möglich, konstruktiv zu bestimmen, wie weit die Fahrzeugtür für den Schiebebetrieb nach außen ausgeschwenkt werden soll. Diese Gestaltung des Hebelwerkes als sechsgliedrige kinematische Kette erlaubt darüber hinaus einen besonders günstigen Bewegungsablauf vom Schwenkvorgang zum Einleiten des Schiebebetriebs der Fahrzeugtür. Das gegebene Zusammenwirken von Parallelogrammhebeltrieb und Geradschubkurbeltrieb bewirkt, daß die Fahrzeugtür zunächst angeschwenkt wird, indem das Führungselement auf der Stützführungsschiene eine Schubkolbenbewegung ausführt, wobei der mit ihm zusammenwirkende Hebel wie ein Pleuel und die Fahrzeugtür wie eine Kurbel wirken. Der beispielsweise durch klebende Gummidichtungen gegebene Haftungswiderstand der Fahrzeugtür muß nicht in der bei Schiebetüren üblichen ruckartigen Bewegung überwunden werden, bei der die gesamte Gummidichtung von der Auflage zu trennen ist, sondern es wird vorteilhafterweise aufgrund der Schwenkbewegung, die der Schiebebewegung vorangeht, die Dichtung der Fahrzeugtür nach und nach gelöst.

Natürlich kann das Hebelwerk auch als viergliedrige kinematische Kette ausgebildet sein ohne daß auf diese genannten grundsätzlichen Vorteile, nämlich des Übergangs von einer Schwenkbewegung in die Schiebebewegung, verzichtet werden muß.

Nach einer vorteilhaften Ausgestaltung der Erfindung wirkt zwischen Karosserie und Zwischenstück eine Hilfsfeder mindestens in Schließrichtung der Türschwenkbewegung. Diese Federkraft muß überwunden werden, bevor das Zwischenstück um das Scharniergelenk 13 schwenkt. Wie oben beschrieben, bleibt bei diesem ersten Schwenken das Hebelparallelogramm unverändert. Diese Hilfsfeder unterstützt zudem die Schließbewegung der Tür, so daß beim Zuschlagen einer Tür solche durch die Gummidichtungen und ungünstige Hebelverhältnisse bestehenden Schließwiderstände leichter überwindbar sind.

Als Ausführungsform dieser Ausgestaltung kann als Hilfsfeder ein Pneumatikzylinder dienen, dessen die Federwirkung erzeugender kompressibler Raum mittels eines Steuerventils schaltbar ist, wobei dieser Pneumatikzylinder weitgehend waagerecht angeordnet ist. Hierdurch wirkt er in der Schwenkebene. Sobald die Fahrzeugtür in Schwenkbetrieb arbeiten soll und das Zwischenstück nicht wie beim Schiebebetrieb in seine Ausgangslage zurückführt, sondern weiter um das Scharniergelenk geschwenkt wird, muß mittels des Steuerventils für den weiteren Schwenkvorgang die Federwirkung des Pneumatikzylinders ausgeschaltet werden.

Nach einer anderen Ausführungsform dieser eine Hilfsfeder in Form eines Pneumatikzylinders aufweisenden Ausgestaltung ist der Pneumatikzylinder weitgehend quer zur Schwenkbewegungsrichtung (Schwenkebene) angeordnet, einerseits schwenkbar mit der Karosserie und andererseits mit einem mit dem Zwischenstück gekoppelten, auf einer Führungsschiene laufenden Gleitstein verbunden, so daß je nach Schwenklage des Pneumatikzylinders und damit gegebener Wirkrichtung der Feder die von in Schließrichtung, über Neutral- bis in Öffnungsrichtung der Tür reicht. Hierdurch ist es in vorteilhafter Weise möglich, statt mit einer pneumatischen Feder auch mit einer Druckfeder sonstiger Art auszukommen, wie beispielsweise einer in einem Teleskopzylinder angeordneten Schraubenfeder, da ein Abschalten der pneumatischen Federwirkung bei reinem Schwenkbetrieb nicht erforderlich ist. Vorteilhafterweise unterstützt diese Feder bei reinem Schwenkbetrieb das vollständige Öffnen der Tür. Natürlich kann als je nach Schwenklage in entgegengesetzter Richtung wirkende Feder auch eine Anordnung dienen, ähnlich wie man sie von Schranktüren her kennt, bei denen diese Feder in Schließstellung der Schranktür gleichzeitig Zuhaltewirkung aufweist.

Ein weiteres vorteilhaftes Merkmal dieser Ausführungsform besteht darin, daß die Kraftwirkungsrichtung des Parallelogrammhebeltriebes und des Geradschubkurbeltriebes bei geschlossener Fahrzeugtür gleich sind. Somit ergibt sich bei geschlossener Fahrzeugtür eine stabile Ruhelage der drei in dieser Stellung parallel wirkenden Hebel, bevor das Anschwenken der Fahrzeugtür für eine Betätigung im Schiebebetrieb erfolgt. Beim ersten Anschwenken wirken die beiden Hebel des Parallelogrammhebeltriebes bis zum durch Anschlag bestimmten Endpunkt des als Kolben wirkenden Führungselements des Geradschubkurbeltriebes entgegen der Rückstellkraft der Hilfsfeder. Spätestens bei Erreichen des Endpunktes unterstützt die Hilfsfeder die Bewegung der Fahrzeugtür, bis der als Pleuel wirkende Hebel des Geradschubkurbeltriebes bezogen auf die Längsachse der Tür parallel zu den beiden Hebeln des Parallelogrammhebeltriebes wirkt.

Ist hingegen die Betätigungsvorrichtung für das Umschalten von Schwenkbetrieb auf Schiebebetrieb so, eingestellt, daß die Tür im Schwenkbetrieb arbeitet, so ist der Geradschubkurbeltrieb nicht im Eingriff und eine Bewegung zwischen Fahrzeugtür und Zwischenstück ist dadurch in vorteilhafter Weise blockierbar, daß die Betätigungsvorrichtung einen Riegel aufweist, der das Zwischenstück starr mit der Fahrzeugtür kuppelt. Dabei kann der Riegel bei einem ausgestalteten Ausführungsbeispiel als Hubbolzer ausgebildet sein, der in fluchtende Bohrungen eingreift, welche sich in Laschen am Zwischenstück und an der Fahrzeugtür befinden.

Eine weitere Ausgestaltung der Erfindung besteht darin, daß die Betätigungsvorrichtung für das Umschalten von Schwenkbetrieb auf Schiebebetrieb ein Übertragungsgestänge aufweist, welches das längsbewegliche Führungelement des Geradschubkurbeltriebes mit der Stützführungsschiene in Eingriff bringt. Damit ist es möglich, mittels einer einzigen Betätigung sowohl den Riegel zwischen Fahrzeugtür und Zwischenstück zu lösen, damit der Parallelogrammhebeltrieb arbeiten kann, und den Geradschubkurbelbetrieb einzuschalten, damit das gesamte Hebelwerk in der beschriebenen Art wirken kann. Das Einkuppeln des Geradschubkurbeltriebes ist besonders einfach als Hubbewegung realisierbar, so daß nach einer vorteilhaften Ausführungsform das Übertragungsgestänge mindestens einen Kniehebel aufweist, der an seinem Kniegelenk betätigbar ist, der einen ortsfesten Drehpunkt an der Fahrzeugtür aufweist und dessen gegenüberliegendes Hebelende an einer Führung läuft und das Führungselement des Geradschubkurbeltriebes mit der Stützführungsschiene in Eingriff bringt.

Eine weitere Ausgestaltung besteht darin, daß eine Rückstellkraft vorhanden ist, die das Übertragungsgestänge in einer stabilen Ruhestellung für den Schwenkbetrieb der Fahrzeugtür festhält. Diese Ausgestaltung der Erfindung ermöglicht, daß nach jeder einzelnen Umschaltung auf Schiebebetrieb die Fahrzeugtür bei erneutem Öffnen ohne besondere Maßnahmen im Schwenkbetrieb zu bedienen ist. Dieses Merkmal dient besonders der passiven Sicherheit, denn in einem Notfall ist die Fahrzeugtür in gewohnter Weise zu betätigen und Unfallhelfer werden nicht dadurch irritiert, daß sie mit einem ungewohnten Türöffnungsmechanismus konfrontiert sind.

Weitere Vorteile und vorteilhafte Ausgestaltungen der Erfindung sind der nachfolgenden Beschreibung, der Zeichnung und den Ansprüchen entnehmbar.

Ein Ausführungsbeispiel der Erfindung ist mit Varianten in der Zeichnung dargestellt und wird im folgenden näher beschrieben. Es zeigen:

Fig. 1 einen waagerechten Längsschnitt durch eine Fahrzeugtür und die angrenzende Karosserie mit Draufsicht auf das Hebelwerk;

Fig. 2a und 2b einen Ausschnitt aus Fig. 1 in vergrößertem Maßstab zur Erläuterung des funktionellen Aufbaus des Parallelogrammhebeltriebes;

Fig. 3 die Innenansicht der Fahrzeugtür wieder in verkleinertem Maßstab;

Fig. 4 schematisch die Arbeitsweise des erfindungsgemäßen Hebelwerkes in einzelnen Funktionsstellungen a - e;

Fig. 5 eine Teilansicht entsprechend Fig. 3 mit Varianten der Erfindung und

Fig. 6 einen vertikalen Längsschnitt durch die Fahrzeugtür.

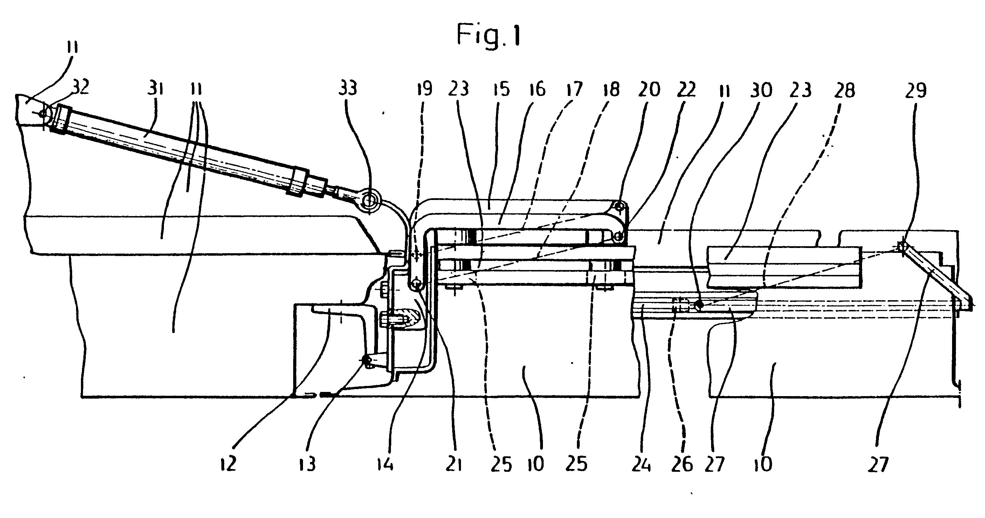

In dem Längsschnitt der Fig. 1 ist die Fahrzeugtür mit 10 und die zur Karosserie des Fahrzeugs gehörenden Teile mit 11 bezeichnet. Das Widerlager 12 an der Karosserie 11, das serienmäßig zur Befestigung einer Fahrzeugtür dient, trägt über Scharniergelenke 13 das Zwischenstück 14, an dem die Parallelogrammhebel 15 und 16 des Parallelogrammhebeltriebes angreifen. Der Parallelogrammhebel 15 wirkt in Richtung der Kraftlinie 17 und ist in den Schwenklagern 19 und 20 gelagert; der Parallelogrammhebel 18 wirkt in Richtung der Kraftlinie 18 und ist in den Schwenklagern 21 und 22 gelagert.

An der Fahrzeugtür 10 befindet sich die Hauptführungsschiene 23 und an der Karosserie 11 die Stützführungsschiene 24. Auf der Hauptführungsschiene 23 läuft das längsbewegliche Führungselement 25 und auf der Stützführungsschiene 24 das längsbewegliche Führungselement 26. Das Führungselement 25 ist über die Schwenklager 20 und 22 jeweils mit dem einen Ende der Parallelogrammhebel 15 und 16 verbunden. Das Führungselement 26 befindet sich an dem einen Ende des Hebels 27, dessen Kraftwirkung durch die Kraftlinie 28 angedeutet ist. Der Hebel 27 ist in den Schwenklagern 29 und 30 gelagert, das Schwenklager 29 befindet sich an der Fahrzeugtür 10, das Schwenklager 30 an dem Führungselement 26, das auf der Stützführungsschiene gleitet. An das Zwischenstück 14 greift ferner die als Pneumatikzylinder 31 ausgebildete Hilfsfeder an. Das eine Ende des Pneumatikzylinders 31 greift, um die Achse 32 bewegbar, an der Karosserie 11 des Fahrzeuges an, das andere Ende an der Achse 33 am Zwischenstück 14.

In der Fig. 1 sind keine Elemente der Betätigungsvorrichtung gezeigt, sondern das Hebelwerk, gebildet aus dem Parallelogrammhebeltrieb mit den Parallelogrammhebeln 15 und 16 und dem Hebel 27, und wie es mit Fahrzeugtür und Karosserie zusammenwirkt. Das Zwischenstück 14 ist gegenüber der Karosserie 11 um das Scharniergelenk 13 schwenkbar und gegenüber den Parallelogrammhebeln 15 und 16 um die Schwenklager 19 und 21 bewegbar.

In der Fig. 1 ist die Fahrzeugtür 10 in geschlossenem Zustand gezeigt. In diesem Zustand wirken die beiden Parallelogrammhebel 15 und 16 parallel mit dem Hebel 27, wie aus den parallel verlaufenden Kraftlinien 17, 18 und 28 zu ersehen ist. Der Hebel 27, der in der Kraftlinie 28 wirkt, ist Teil eines Geradschubkurbeltriebes. Das als Schubkolben wirkende Teil ist das Führungselement 26 auf der Stützführungsschiene 24. Die Wirkung als Pleuel des Hebels 27 ist aus der Kraftlinie 28 zu entnehmen, denn der Hebel 27 ist in den beiden Lagern 29 und 30 bewegbar. Als Kurbel des Geradschubkurbeltriebes wirkt die Fahrzeugtür 10.

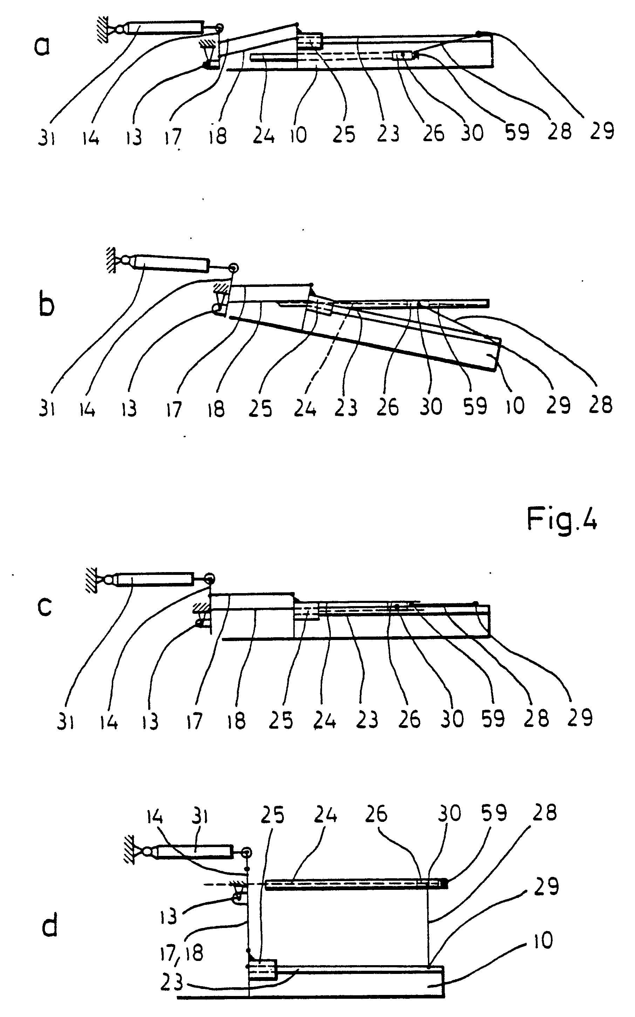

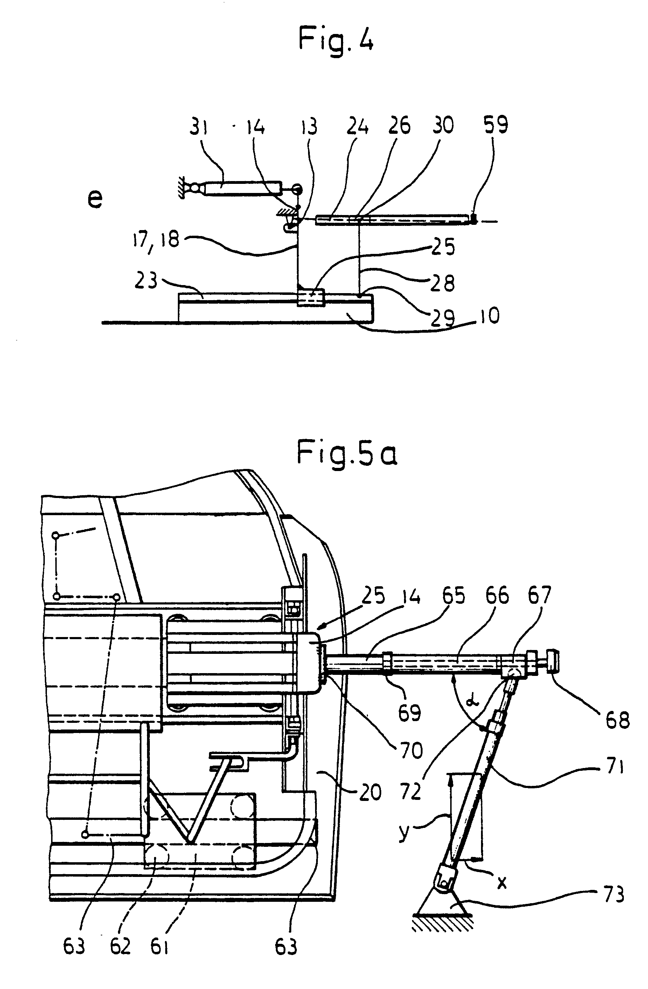

Die Arbeitsweise des gesamten Hebelwerks ist unten zu Fig. 4 beschrieben.

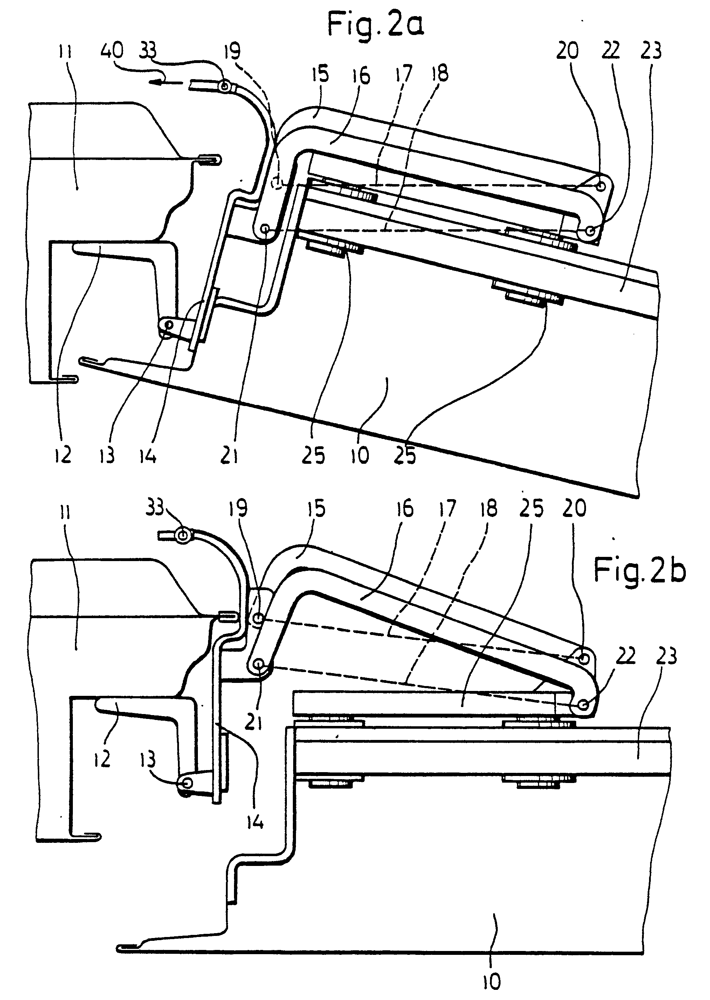

In der in Fig. 2a ist die Fahrzeugtür 10 im ersten ausgeschwenkten Zustand gezeigt, in dem das Zwischenstück 14 im Scharniergelenk 13 des Widerlagers 12 geschwenkt wird. Dieser Schwenkvorgang wird beim normalen Schwenköffnen der Tür fortgesetzt, mit weiterer Drehung um das Scharniergelenk 13. Der erste angeschwenkte Zustand der Fahrzeugtür kann erfindungsgemäß aber auch in den Schiebetrieb übergehen. Das Anschwenken erfolgt entgegen der Federkraft 40. Hierbei verändern die Parallelogrammhebel 15 und 16 ihre Lage, ohne daß dabei das Parallelogramm selbst verändert wird.

In der Fig. 2b ist die Fahrzeugtür 10 nach dem Überschreiten der Strecklage der Parallelogrammhebel 15, 16 sowie Hebel 27 dargestellt. Die Federkraft 40 hat das Zwischenstück 14 wieder in seine Ausgangslage zurückgezogen. Dabei haben sich die Parallelogrammhebel 15 und 16 bewegt und die Fahrzeugtür 10 kann nun so weit ausgeschwenkt werden, daß sie außen an der Karosserie 11 vorbeischiebbar ist. Für den gesamten weiteren Schiebebetrieb der Fahrzeugtür 10 bleibt das Zwischenstück 14 in der in Fig. 2b gezeigten Lage, obwohl das Scharniergelenk 13 weiterhin frei beweglich ist. Dadurch, daß die Parallelogrammhebel 15 und 16 am Zwischenstück 14 und nicht unmittelbar am Scharniergelenk 13 des Widerlagers 12 oder an der Karosserie 11 angreifen, kann der Abstand zwischen Fahrzeugtür 10 und Karosserie 11 in ausgeschwenktem Zustand für den Schiebebetrieb nach Bedarf festgelegt werden.

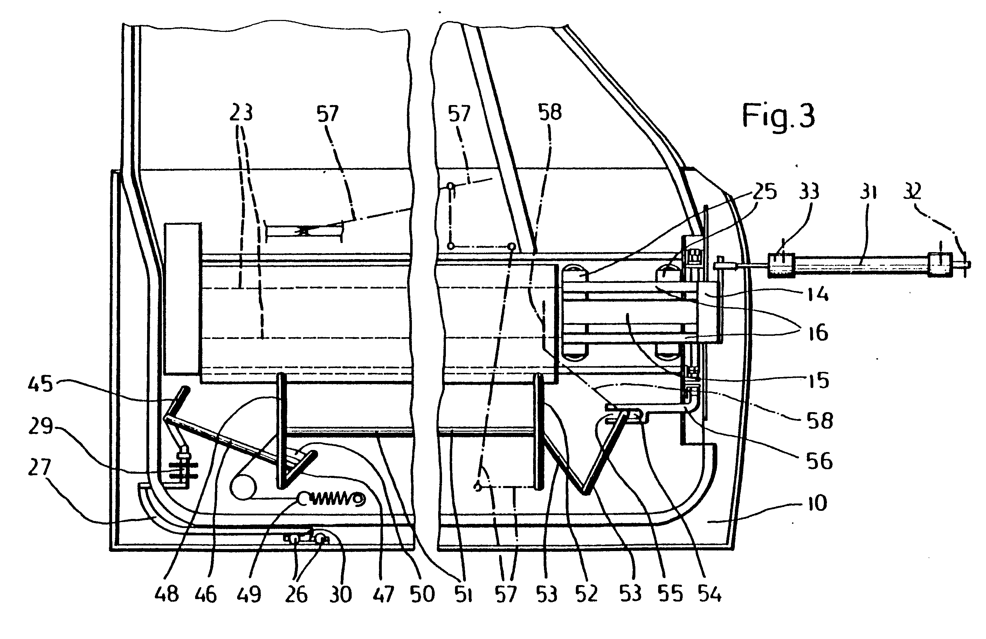

Ferner ist aus den Darstellungen der Figuren 2a und 2b zu erkennen, daß die Fahrzeugtür 10 nur dann für den Schiebebetrieb freigegeben werden kann, wenn sich die beiden Parallelogrammhebel 15 und 16 gegenüber der Fahrzeugtür 10 bewegen können. Diese Bewegung kann dadurch verhindert werden, daß das Zwischenstück 14 an der Fahrzeugtür verriegelt ist; es ist allerdings dazu erforderlich, daß der nicht in Fig. 2 gezeigte Geradschubkurbeltrieb (10, 26, 27) außer Betrieb gesetzt ist. Das Zusammenwirken des Geradschubkurbeltriebes mit dem Parallelogrammhebeltrieb ist aus der Fig. 3 ersichtlich.

Die Fig. 3 zeigt die Innenansicht der Fahrzeugtür 10, die mit dem erfindungsgemäßen Hebelwerk sowie der Betätigungsvorrichtung dazu umgerüstet ist. Der Parallelogrammhebel 16 des Parallelogrammhebeltriebs ist dabei aus Gründen mechanischer Festigkeit doppelt ausgebildet, denn über das Führungselement 25, das auf der Hauptführungsschiene 23 gleitet, wird infolge des Gewichtes der Fahrzeugtür ein erhebliches Moment übertragen. Der Hebel 27 ist in der Darstellung nach Fig. 3 in der Ruhestellung und für Schwenkbetrieb der Fahrzeugtür gezeigt. Er ist über einen Kniehebel 45 nach unten in Richtung auf die nicht in der Fig. gezeigte Stützführungsschiene bewegbar. In seiner unteren Endlage greift das Führungselement 26 in die nicht in der Fig. dargestellte Stützführungsschiene ein. Der Kniehebel 45 ist über die Hebel 46 und 47 mit dem Kniehebel 48 verbunden. Der Kniehebel 48 wird über die Rückstellkraft der Feder 49 in der gezeigten Endlage gehalten. Dabei wirkt zwischen dem Kniehebel 48 und dem Hebel 47 ein Loos 50, so daß der Kniehebel 45 erst nach einer gewissen Einknickung des Kniehebels 48 gestreckt wird. Der Kniehebel 48 arbeitet über einen Verbindungshebel 51 mit einen weiteren Kniehebel 52 zusammen. Dabei greift an dem Knickpunkt des Kniehebels 52 außer dem Verbindungshebel noch ein V-förmiger Hebel 53 an, der an seinem anderen Ende einen Exzenter 54 aufweist. Der Exzenter 54 wirkt mit dem Schlitz 55 des Hubbolzens 56 zusammen. Die festen Drehpunkte der einzelnen Hebel sind mit dem Symbol ⊕ gekennzeichnet.

Die Betätigungsvorrichtung für das Umschalten auf Schiebebetrieb umfaßt die Einzelteile 45 bis 56. Das Umschalten erfolgt, indem die Kniehebel 48 und 52 eingeknickt werden. Das kann einmal über ein nicht näher ausgeführtes Gestängewerk, das mit dem strichpunktierten Linienzug 57 angedeutet ist, von der Außenseite der Fahrzeugtür geschehen, oder aber, über den Linienzug 58 angedeutet, von der Innenseite der Fahrzeugtür 10 aus. Das Einknicken der beiden Kniehebel 48 und 52 bedeutet, daß der Verbindungshebel 51 in Fahrtrichtung verschoben wird und daß der Winkel des V-förmigen Hebels 53 spitzer wird. Dadurch arbeitet der Exzenter 54 gegen den Schlitz 55 und hebt den Hubbolzen 56 an, der eine in der Fig. nicht ausführlich dargest. Verriegelung des Zwischenstückes 14 mit der Fahrzeugtür 10 löst, so daß eine Bewegung der beiden Parallelogrammhebel 15 und 16 in der in Fig. 2 gezeigten Weise möglich ist. Die Fahrzeugtür ist demnach nur durch ein bewußtes Umschalten bei 57 bzw. 58 aus dem Schwenkbetrieb in den Schiebebetrieb als Schiebetür bedienbar, und durch die Rückstellkraft der Feder 49 wird das aus den Elementen 45 bis 54 gebildete Übertragungsgestänge mittels zum Teil in Fig. 3 nicht dargestellten Elementen nach jeder Betätigung wieder in die Ruhelage zurückgestellt, in welcher die Fahrzeugtür als Schwenktür zu öffnen bzw. zu schließen ist.

Ebenfalls in der Fig. 1 und Fig. 3 nicht dargestellt ist ein bei dieser Variante erforderliches Steuerventil, das den Pneumatikzylinder 31 nur dann als Hilfsfeder wirken läßt, wenn auf Schiebebetrieb umgestellt ist.

In der Fig. 4 ist in der Reihenfolge der Stellungen a bis e die Arbeitsweise des erfindungsgemäßen Hebelwerkes für den Übergang von Schwenk- in Schiebebetrieb schematisch erläutert. Dabei sind alle Elemente der Betätigungsvorrichtung für das Umschalten von Schwenkbetrieb auf Schiebebetrieb weggelassen und alle Hebel sind durch ihre Kraftlinien ersetzt.

Stellung a zeigt die Fahrzeugtür 10 in geschlossenem Zustand. Dabei verlaufen die Kraftlinien 17, 18 und 28 parallel. Die Endstellung des Führungselementes 26 ist durch einen Anschlag 59 begrenzt. Dieser Anschlag kann z. B. als Magnet ausgebildet sein, um ein gewisses Haften des Führungselementes 26 in seiner Endstellung zu erreichen. Das Parallelogrammhebelwerk 17, 18 greift an Zwischenstück 14 und dem Führungselement 25 an. Die Öffnungsphase für den Schiebebetrieb der Fahrzeugtür 10 wird durch Anschwenken des hinteren Fahrzeugtürendes eingeleitet. (Stellung b) Dabei werden nach und nach die Reibungskräfte der geschlossenen Fahrzeugtür 10 überwunden. Dabei beginnt der Geradschubkurbeltrieb, gebildet aus dem von der Stützführungsschiene 24 geführten Führungselement 26 als Kolben, dem durch die Kraftlinie 28 dargestellten und als Pleuel wirkenden Hebel, der an den Lagern 29 und 30 schwenkbar ist und der als Kurbel wirkenden Fahrzeugtür, zu arbeiten. Das Führungselement 26 läuft bis zum Ende des ersten, in Stellung b dargestellten Bewegungsabschnittes entgegen der Federkraft des Pneumatikzylinders 31. Das Zwischenstück 14 bewegt sich dabei noch nicht relativ zur Tür. Das Führungselement 26 ist nun in seiner Endlage von dem Anschlag 59 festgelegt, so daß die Federwirkung des Pneumatikzylinders 31 die Fahrzeugtür 10 in eine Zwischenstellung zieht, die in der Stellung c gezeigt ist. In den Hebelbewegungen von Stellung b bis nach Stellung c arbeitet die gesamte Anordnung, gebildet aus dem Parallelogrammhebelbetrieb 17, 18, den zum Geradschubkurbeltrieb gehörenden Elementen 10, 26, 28 und dem Scharniergelenk 13 als sechsgliedrige kinematische Kette nach Stephenson, wobei die Elemente 10, 26 und 28 nicht als Geradschubkurbeltrieb arbeiten, da das Element 26 durch den Anschlag 59 festgehalten wird, beispielsweise durch dessen Magnetkraft. In Stellung b sind die Kraftlinien 17, 18 und 28 der Hebel nicht parallel, hingegen in Stellung c verlaufen die Kraftlinien aller Hebel, also die Kraftlinien 17, 18 und 28 in einer Richtung (parallel). Der Pneumatikzylinder ist in Stellung c wieder in seiner Ruhelage, übt demnach keine Kraft mehr auf das Hebelwerk aus. Die Bewegung der Fahrzeugtür von Stellung c nach Stellung d erfolgt als reines Parallelverlagern der Türe 10, wofür ein Schwenken der Hebel erforderlich ist, Das Führungselement 26 verbleibt in seiner Endlage am Anschlag 59 und die Hebel wirken nun wie eine viergliedrige kinematische Kette, also wie eine Parallelogrammhebelanordnung. Ist die in Stellung d dargestellte Endlage erreicht, so wird die Fahrzeugtür 10 längsbeweglich auf der Hauptführungsschiene 23 und der Stützführungsschiene 24 verschoben, wie in Stellung e gezeigt, indem die entsprechenden Führungselemente 25 und 26 auf den Führungsschienen arbeiten. Das Schließen der Fahrzeugtür 10 verläuft analog, dabei werden die in Stellung a bis Stellung e gezeigten Phasen rückwärts durchlaufen.

Je geringer der Abstand zwischen den gleichsinnig verlaufenden Kraftlinien 17 und 18 sowie der Kraftlinie 28 wird (Stellung e), desto größer wird das Belastungsmoment, das von dem Gewicht der Fahrzeugtür 10 herrührt und von den Führungselementen 25 und 26, insbesondere aber vom Führungselement 25, aufgenommen werden muß.

Bei der die Varianten enthaltenden Darstellung der Tür in Fig. 5 ist an der Tür eine Zusatzführung 61 befestigt, zwischen deren Rollen 62 eine Zusatzschiene 63 in Verschieberichtung der Fahrzeugtür 10 geführt ist. Sobald die Fahrzeugtür 10 in eine Schiebestellung gelangt, in der bei weitgehend geöffneter Tür das an dem Führungselement 25 angreifende Moment stark vergrößert ist, wird die Zusatzschiene 63 durch nicht gezeigte Mittel in Verschieberichtung der Tür 10 auf den Rollen 62 der Zusatzführung 61 so weit ausgefahren, bis sie auf ein karosseriefestes Auflager stößt, welches die Momente auffängt und beispielsweise an der Stoßstange vorhanden sein kann. Beim Zurückschieben der Fahrzeugtüre 10 in Schließrichtung fährt diese Zusatzschiene 63 beschleunigt zurück, so daß sie spätestens dann, wenn die Fahrzeugtür 10 wieder parallel nach innen verschoben wird, vollständig eingefahren ist.

In Fig. 5 ist darüber hinaus eine weitere Variante der Erzeugung der Federkraft 40 dargestellt. Am Zwischenstück 14 der Fahrzeugtür 10 ist eine Verbindungsstange 65 angekoppelt, die mit ihrem anderen Ende mit einem Gleitstein 67 verbunden ist. Der Gleitstein 67 gleitet auf einer Führungsstange 66, deren Gleitbahn in der Länge durch Anschläge 68, 69 begrenzt ist. Die Verbindungsstange 66 kann an das Zwischenstück 14 über ein Scharnier 70 gekoppelt sein, kann aber auch so gekrümmt ausgebildet sein, daß ein Scharnier nicht erforderlich ist, da die Krümmung der Schwenkbewegung des Zwischenstücks 14 um das Scharniergelenk 13 entspricht. An dem Gleitstein 67 ist ein Federzylinder 71 bei 72 gelenkig verbunden, der auf seiner anderen Seite an einem karosseriefesten Punkt ebenfalls eine gelenkige Verbindung 73 aufweist. Je nach Lage des Gleitsteins 67 und damit je nach Schwenkstellung der Tür 10 ändert sich der zwischen der Verbindungsstange 65 und dem Federzylinder 71 eingeschlossene Winkel $\alpha$. Die von dem Federzylinder 71 ausgehende Federkraft teilt sich somit je nach Winkel in eine horizontale Komponente x und in eine vertikale Komponente y auf. In der dargestellten Stellung des Federzylinders 71 wirkt die vertikale Komponente x nach rechts, d.h. in Schließrichtung der Tür, indem der Gleitstein 67 auf die Verbindungsstange 65 in der entsprechenden Richtung angreift. Sobald nun die Tür 10 angeschwenkt wird (Fig. 4, Stellung b), bleibt diese Kraftrichtung des Federzylinders 71 erhalten, wenn auch eine gewisse Verringerung der Federkraft durch Verkürzung von x infolge Vergrößerung von Alpha eintritt. Dieses ist aber auch, wie oben ausgeführt, gewünscht. Wenn nun die Tür 10 weiter geschwenkt werden soll, also nicht in den Schiebevorgang übergeleitet wird, so vergrößert sich der Winkel $\alpha$ über 90° hinaus, so daß ab einem bestimmten Winkel der Gleitstein 67 in die andere Endlage an den Anschlag 69 gleitet, so daß die Federkraft in die entgegengesetzte Richtung, nämlich in Öffnungsrichtung, der Schwenkfunktion befindlichen Tür wirkt. Wenn aber von der Anschwenklage in die Schiebephase übergegangen wird (Fig. 4, Stellung c) wird aufgrund der Kraft des Federzylinders 71 das Zwischenstück 14 wieder in seine Ausgangslage gezogen, so daß der Federzylinder 71 die in Fig. 5 gezeigte Stellung wieder einnimmt.

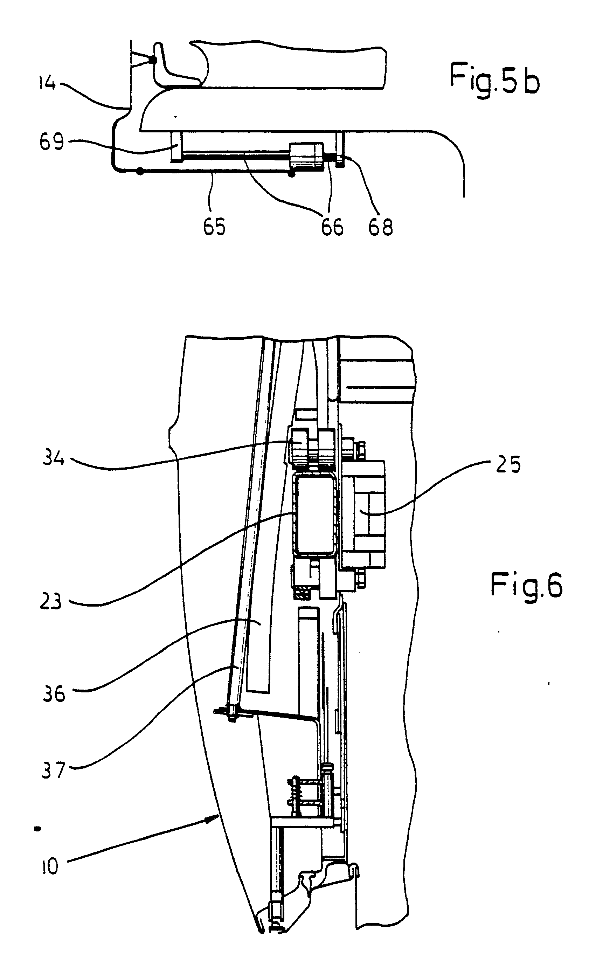

Im in Fig. 6 dargestellten vertikalen Längsschnitt durch die Tür 10 wird die Unterbringung der einzelnen Elemente nebeneinander in der Tür ersichtlich. Neben dem Führungselement 25 ist die Hauptführungsschiene 23 angeordnet, auf der die Rollen 34 des Führungselements 25 laufen.

Die Fensterscheibe 36 der Tür 10 ist in bezug auf das Fahrzeuginnere außerhalb der Hauptführungsschiene 23 angeordnet, um damit zu ermöglichen, daß die Parallelogrammhebel in der dargestellten Weise mit dem Zwischenstück 14 verbindbar sind. Da die Fensterscheibe 36 andererseits so dicht wie möglich in der Türmitte angeordnet sein soll, um die erforderliche Neigung zur Vertikalen hin einhalten zu können, ist Gewindespindel 37 des Fensterhebersystems außerhalb der Fensterscheibe 36 angeordnet.

## Patentansprüche

1. Vorrichtung zum Öffnen und Schließen von Fahrzeugtüren (10) mit zwischen Fahrzeugtür (10) und Karosserie (11) wirkenden Schwenkhebeln (14, 15, 16), die auf Führungsschienen (23, 24) gleitbeweglich angreifen, wobei die Schwenkhebel (14, 15, 16) ein mehrgliedriges Hebelwerk in der Art einer mehrgliedrigen kinematischen Kette bilden und Elemente (12, 25, 26) des Hebelwerkes einerseits an der Karosserie (11) des Fahrzeugs schwenkbar angebracht sind und andererseits mit auf Führungsschienen (23, 24) längs verschiebbaren Führungselementen (25, 26, 34) verbunden sind und die Kinematik des Hebelwerkes (14, 15, 16) mittels einer Betätigungsvorrichtung (45 bis 56) so veränderbar ist, daß die Fahrzeugtür (10) wahlweise im Schiebebetrieb oder im Schwenkbetrieb zu öffnen bzw. zu schließen ist, dadurch gekennzeichnet, daß die schwenkbaren Elemente (15, 16) des Hebelwerkes mittelbar an der Karosserie (11) des Fahrzeugs angebracht sind, daß die kinematische Kette geschlossen sowie bestimmt ist, so daß beim Öffnen zuerst eine übliche Anschwenkung und danach eine Verschiebepositionsstellung erreichbar ist und daß zum mittelbaren Anbringen der Elemente (15, 16) des Hebelwerkes an der Karosserie (11) ein Zwischenstück (14) vorhanden ist, an welchem die Elemente (15, 16) des Hebelwerkes angreifen und welches an der Karosserie (11) in Türöffnungsrichtung schwenkbar befestigt ist.

2. Vorrichtung zum Öffnen und Schließen von Fahrzeugtüren nach Anspruch 1, dadurch gekennzeichnet, daß an der Fahrzeugtür (10) eine Hauptführungsschiene (23) und an der Türschwelle der Karosserie eine Stützführungsschiene (24) angebracht ist, von denen Führungselemente längsbeweglich geführt werden, und daß das mit der Stützführungsschiene (24) zusammenwirkende Führungselement (26) für den Schiebebetrieb der Fahrzeugtür mittels der Betätigungsvorrichtung mit der Stützführungsschiene (24) in Eingriff zu bringen ist.

3. Vorrichtung zum Öffnen und Schließen von Fahrzeugtüren nach Anspruch 1 oder 2, dadurch gekennzeichnet, daß das Zwischenstück (14) an die serienmäßig am Fahrzeug vorhandenen Teile des Schraniergelenks (12, 13) für die Fahrzeugtür (10) angebracht ist.

4. Vorrichtung zum Öffnen und Schließen von Fahrzeugtüren nach einem der vorhergehenden Ansprüche, dadurch gekennzeichnet, daß das Hebelwerk je nach Funktionslage als Geradschubkurbeltrieb (Anschwenkung) als sechsgliedrige Kette (in Parallelstellung schwenken) und als Parallelogrammhebeltrieb (sechsgliedrige Kette mit viergliedriger Funktion) arbeitet, wobei das längs verschiebbare Element (26) des Geradschubkurbeltriebes, das auf der Stützführungsschiene (24) laufende Führungselement (26) darstellt und der Parallelogrammhebelbetriebes (15, 16) das Zwischenstück (14) mit dem auf der Hauptführungsschiene (23) längs bewegliche Führungselement (25) verbindet.

5. Vorrichtung zum Öffnen und Schließen von Fahrzeugtüren nach einem der vorhergehenden Ansprüche, dadurch gekennzeichnet, daß zwischen Karosserie (11) und Zwischenstück (14) eine Hilfsfeder (31) mindestens in Schließrichtung der Türschwenkbewegung wirkt.

6. Vorrichtung zum Öffnen und Schließen von Fahrzeugtüren nach Anspruch 5, dadurch gekennzeichnet, daß die Hilfsfeder als Pneumatikzylinder (31) ausgebildet ist, dessen die Federwirkung erzeugender kompressibler Raum mittels eines Steuerventils schaltbar ist und der weitgehend waagrecht angeordnet ist (Fig. 3).

7. Vorrichtung zum Öffnen und Schließen von Fahrzeugtüren nach Anspruch 5, dadurch gekennzeichnet, daß die Hilfsfeder als Druckfeder vorzugsweise in Form eines Federzylinders (71) ausgebildet ist, deren Wirkrichtung weitgehend quer zur Schwenkbewegungsrichtung (Schwenkebene) angeordnet ist, daß sie einerseits schwenkbar mit der Karosserie und andererseits mit einem mit dem Zwischenstück (14) gekoppelten, auf einer ortsfesten Führungsstange (66) laufenden Gleitstein (67) verbunden ist, so daß je nach Schwenklage (α) die Federwirkung in Schließrichtung, über neutral bis in Öffnungsrichtung der Fahrzeugtür (10) ist.

8. Vorrichtung zum Öffnen und Schließen von Fahrzeugtüren nach einem der vorhergehenden Ansprüche, dadurch gekennzeichnet, daß die Betätigungsvorrichtung einen Riegel aufweist, der das Zwischenstück (14) starr mit der Fahrzeugtür (10) kuppelt.

9. Vorrichtung zum Öffnen und Schließen von Fahrzeugtüren nach Anspruch 8, dadurch gekennzeichnet, daß der Riegel als Hubbolzen (56) ausgebildet ist, der in fluchtende Bohrungen eingreift, welche sich in Laschen am Zwischenstück (14) und an der Fahrzeugtür (10) befinden.

10. Vorrichtung zum Öffnen und Schließen von Fahrzeugtüren nach einem der Ansprüche 4 bis 7, dadurch gekennzeichnet, daß das Übertragungsgestänge mindestens einen Kniehebel (45) aufweist, der an seinem Kniegelenk betätigbar ist, der einen ortsfesten Drehpunkt an der Fahrzeugtür (10) aufweist und dessen gegenüberliegendes Hebelende in einer Führung läuft und das Führungselement (26) des Geradschubkurbeltriebes mit der Stützführungsschiene (24) in Eingriff bringt.

11. Vorrichtung zum Öffnen und Schließen von Fahrzeugtüren nach Anspruch 10, dadurch gekennzeichnet, daß eine Rückstellkraft (49) vorhanden ist, die das Übertragungsgestänge in einer stabilen Ruhestellung für den Schwenkbetrieb der Fahrzeugtür (10) festhält.

12. Vorrichtung zum Öffnen und Schließen von Fahrzeugtüren nach einem der vorhergehenden Ansprüche, dadurch gekennzeichnet, daß die Fensterhebeeinrichtung (37) der Tür vom Fahrzeuginneren her gesehen nach außerhalb der Vorrichtung, nämlich zwischen Vorrichtung und Türaußenblech, verlegt ist und daß die Fensterscheibe (36) vorzugsweise zwischen Hebeeinrichtung (37) und Vorrichtung (23 und 25) bewegt wird.

13. Vorrichtung zum Öffnen und Schließen von Fahrzeugtüren nach einem der vorhergehenden Ansprüche, dadurch gekennzeichnet, daß während des Schiebebetriebs (Fig. 4, Stellung e) der Fahrzeugtür (10) in Verschieberichtung eine in einer mit der Fahrzeugtür (10) verbundenen Zusatzführung (61) gelagerte Zusatzschiene (63) und an einem karosseriefesten Punkt, insbesondere Stoßstange, auflagerbar ist.

14. Vorrichtung zum Öffnen und Schließen von Fahrzeugtüren nach Anspruch 13, dadurch gekennzeichnet, daß als Zusatzführung eine Kugelbüchse und als Zusatzschiene eine Hohlwelle dient.

## Claims

1. Device for opening and closing vehicle doors (10), with pivoted levers (14, 15, 16) acting between vehicle door (10) and bodywork (11), said levers acting on guide rails (23, 24) in sliding fashion, where the pivoted levers (14, 15, 16) form a multi-element lever gear with the nature of a multi-element kinematic chain and elements (12, 25, 26) of the lever gear are, on the one hand, attached in pivoting form to the bodywork (11) of the vehicle and, on the other hand, connected to guide elements (25, 26, 34) sliding longitudinally on guide rails (23, 24) and the kinematics of the lever gear (14, 15, 16) can be varied by means of an actuating device (45 to 56) in such a way that the vehicle door (10) can be opened or closed either in sliding fashion or pivoting fashion, characterized by the fact that the pivoting elements (15, 16) of the lever gear are attached indirectly to the bodywork (11) of the vehicle, that the kinematic chain is closed and determinate so that, on opening, the usual pivoting can be achieved, followed by positioning by sliding, and that, for indirect attachment of the elements (15, 16) of the lever gear on the bodywork (11), an adapter (14) is provided on which the elements (15, 16) of the lever gear act and which is mounted on the bodywork (11) in a manner allowing pivoting in the opening direction of the door.

2. Device for opening and closing vehicle doors in accordance with Claim 1, characterized by the fact that a main guide rail (23) is attached to the vehicle door (10) and a supporting guide rail (24) to the door sill of the bodywork, said rails guiding guide elements in a longitudinally sliding fashion, and that, for sliding operation of the vehicle door, the guide element (26) acting in conjunction with the supporting guide rail (24) has to be engaged in the supporting guide rail (24) by means of the actuating device.

3. Device for opening and closing vehicle doors in accordance with Claim 1 or 2, characterized by the fact that the adapter (14) is attached to the parts of the hinge joint (12, 13) for the vehicle door (10) provided on the vehicle as standard.

4. Device for opening and closing vehicle doors in accordance with one of the preceding Claims, characterized by the fact that, depending on its functional position, the lever gear operates as a slider crank mechanism (pivoting), as a six-link chain (pivoting in parallel position) and as a parallelogram crank mechanism (six-link chain with four-link function), where the longitudinally sliding element (26) of the slider crank mechanism represents the guide element (26) running on the supporting guide rail (24) and the parallelogram crank mechanism (15, 16) connects the adapter (14) with the longitudinally sliding guide element (25) on the main guide rail (23).

5. Device for opening and closing vehicle doors in accordance with one of the preceding Claims, characterized by the fact that an auxiliary spring (31) acts between the bodywork (11) and the adapter (14), at least in the closing dirrection of the door pivoting movement.

6. Device for opening and closing vehicle doors in accordance with Claim 5, characterized by the fact that the auxiliary spring is designed as a pneumatic cylinder (31) whose compressible space generating the spring effect can be controlled by means of a control valve and which is essentially positioned horizontally (Fig. 3).

7. Device for opening and closing vehicle doors in accordance with Claim 5, characterized by the fact that the auxiliary spring is designed as a pressure spring, preferably in the form of a spring cylinder (71), whose direction of action is essentially transverse to the direction of pivoting motion (pivoting plane), and that it is, on the one hand, connected in pivoting fashion to the bodywork and, on the other hand, to a sliding block (67) coupled to the adapter (14) and running on a fixed guide rod (66), so that, depending on the pivoting position (α), the spring acts in the closing direction of the vehicle door (10), via neutral to opening direction.

8. Device for opening and closing vehicle doors in accordance with one of the preceding Claims, characterized by the fact that the actuating device has a bar which rigidly couples the adapter (14) to the vehicle door (10).

9. Device for opening and closing vehicle doors in accordance with Claim 8, characterized by the fact that the bar is designed as a lifting bolt (56) which engages in aligned bores located in tabs on the adapter (14) and the vehicle door (10).

10. Device for opening and closing vehicle doors in accordance with one of the Claims 4 to 7, characterized by the fact that the transmission gear has at least one toggle lever (45) which can be actuated at its toggle joint, has a fixed fulcrum on the vehicle door (10) and whose opposite lever end runs in a guide and engages the guide element (26) of the slider crank mechanism with the supporting guide rail (24).

11. Device for opening and closing vehicle doors in accordance with Claim 10, characterized by the fact that a restoring force (49) is provided which retains the transmission gear in a stable rest position for pivoting operation of the vehicle door (10).

12. Device for opening and closing vehicle doors in accordance with one of the preceding Claims, characterized by the fact that, seen from inside the vehicle, the window opening device (37) of the door is repositioned beyond the device, namely between device and outer door panel, and that the window pane (36) is preferably moved between opening device (37) and device (23 and 25).

13. Device for opening and closing vehicle doors in accordance with one of the preceding Claims, characterized by the fact that, during sliding operation (Fig. 4, position e) of the vehicle door (10) in sliding direction, a supplementary rail (63) mounted in a supplementary guide (61) connected to the vehicle door (10) and on a fixed point of the bodywork, particularly the bumper, can be supported.

## Revendications

1. Dispositif servant à ouvrir et à fermer les portières (10) d'un véhicule, muni de leviers basculants (14, 15, 16) opérant entre la portière (10) et la carrosserie (11) et agissant en un mouvement coulissant sur les rails guides (23, 24). Les leviers basculants (14, 15, 16) constituant alors un mécanisme à levier comprenant plusieurs éléments dans le genre d'une chaîne cinématique à plusieurs éléments. Les éléments (12, 25, 26) du mécanisme à levier étant d'une part montés sur la carrosserie (11) du véhicule de sorte à pouvoir basculer et d'autre part reliés à des éléments de guidage (25, 26, 34) déplaçables longitudinalement sur des rails guides (23, 24). La cinématique du mécanisme à leviers (14, 15, 16) pouvant être modifiée au moyen d'un dispositif de commande (45 à 56) de sorte que la portière (10) peut être ouverte ou fermée par coulissement ou par basculement, au choix. Dispositif caractérisé par le fait que les éléments (15, 16) basculants du mécanisme à levier sont montés indirectement sur la carrosserie (11) du véhicule, que la chaîne cinématique est fermée et définie de sorte à ce que lors de l'ouverture, l'on puisse d'abord obtenir un léger basculement habituel et puis une position de translation, et caractérisé enfin par le fait que pour la fixation indirecte des éléments (15, 16) du mécanisme à levier sur la carrosserie (11), il existe une pièce intermédiaire (14) sur laquelle agissent les éléments (15, 16) du mécanisme à levier et qui est fixée sur la carrosserie (11) dans le sens de l'ouverture de la portière, de sorte à pouvoir basculer.

2. Dispositif servant à ouvrir et à fermer les portières d'un véhicule selon la revendication 1, caractérisé par le fait qu'un rail principal (23) est monté sur la portière (10) et qu'un rail support (24) est fixé sur le seuil de la portière sur la carrosserie, lesquels rails guident dans un plan longitudinal les éléments de guidage, et encore par le fait que l'élément de guidage (26) agissant conjointement avec le rail support (24) et qui est conçu pour le fonctionnement coulissement de la portière peut s'engrener dans le rail support (24) par le moyen du dispositif de commande.

3. Dispositif servant à ouvrir et à fermer les portières d'un véhicule selon la revendication 1 ou 2, caractérisé par le fait que la pièce intermédiaire (14) est posée sur les pièces, montées en série sur le véhicule, de l'articulation de la charnière (12, 13) de la portière (10).

4. Dispositif servant à ouvrir et à fermer les portières d'un véhicule selon une des revendications précédentes, caractérisé par le fait que le mécanisme à leviers fonctionne, en fonction de sa position, en tant que système bielle - manivelle à poussée droite (léger basculement), que chaîne à six éléments (basculement en position parallèle) et que mécanisme de levier en parallélogramme (chaîne à six éléments avec fonction à quatre éléments). Ce faisant, l'élément déplaçable en long (26) du mécanisme bielle - manivelle à poussée droite représente l'élément de guidage (26) se déplaçant sur le rail support (24) et le fonctionnement des leviers en parallélogramme (15, 16) relie la pièce intermédiaire (14) à l'élément de guidage (25) se mouvant dans un plan longitudinal sur le rail principal (23).

5. Dispositif servant à ouvrir et à fermer les portières d'un véhicule selon une des revendications précédentes, caractérisé par le fait qu'entre la carrosserie (11) et la pièce intermédiaire (14) un ressort compensateur (31) agit au moins dans le sens de la fermeture du basculement de la portière.

6. Dispositif servant à ouvrir et à fermer les portières d'un véhicule selon la revendication 5, caractérisé par le fait que le ressort compensateur a la configuration d'un cylindre pneumatique (31) dont l'espace compressible engendrant l'effet de ressort est commutable au moyen d'une valve régulatrice, et qui est disposé largement à l'horizontale. (Fig. 3)

7. Dispositif servant à ouvrir et à fermer les portières d'un véhicule selon la revendication 5, caractérisé par le fait que le ressort compensateur en tant que ressort à pression a de préférence la forme d'un cylindre à ressort (71) dont la direction de l'effet est dans une large mesure orientée de sorte à être transversale au sens du basculement (plan du basculement), qu'il est relié d'une part à la carrosserie de manière à pouvoir basculer et d'autre part au glisseur (67), couplé à la pièce intermédiaire (14), qui se déplace sur une barre de guidage fixe (66) de sorte à ce qu'en fonction du basculement, l'effet du ressort aille du sens de la fermeture jusqu'au sens de l'ouverture de la portière (10) en passant par le sens neutre.

8. Dispositif servant à ouvrir et à fermer les portières d'un véhicule selon une des revendications précédentes, caractérisé par le fait que le dispositif de commande présente un verrou accouplant la pièce intermédiaire (14) rigidement à la portière du véhicule (10).

9. Dispositif servant à ouvrir et à fermer les portières d'un véhicule selon la revendication 8, caractérisé par le fait que le verrou a la configuration d'un boulon de levage (56) qui pénètre dans les perçages alignés se trouvant dans les brides de serrage sur la pièce intermédiaire (14) et sur la portière du véhicule (10).

10. Dispositif servant à ouvrir et à fermer les portières d'un véhicule selon les revendications 4 à 7, caractérisé par le fait que les tiges de transmission présentent au moins une genouillère (45) qui est actionnable au niveau de son articulation, qui présente un point de rotation fixe sur la portière (10) du véhicule et dont l'extrémité opposée du levier se déplace dans un rail et met en contact l'élément de guidage (26) du système bielle - manivelle à poussée droite avec le rail support (24).

11. Dispositif servant à ouvrir et à fermer les portières d'un véhicule selon la revendication 10, caractérisé par le fait qu'il existe une force de rappel (49) maintenant les tiges de transmission dans une position de repos stable pour le fonctionnement en basculement de la portière (10) du véhicule.

12. Dispositif servant à ouvrir et à fermer les portières d'un véhicule conformément à une des revendications précédentes, caractérisé par le fait que le lève-vitres (37) de la portière est déplacé à l'extérieur du dispositif, en l'occurrence entre le dispositif et le panneau extérieur de la porte, si l'on se place à l'intérieur du véhicule, et que la vitre (36) est mue de préférence entre le lève-vitre (37) et le dispositif (23 et 25).

13. Dispositif servant à ouvrir et à fermer les portières d'un véhicule conformément à une des revendications précédentes, caractérisé par le fait que pendant le fonctionnement en coulissement (Fig. 4, position e) de la portière (10) du véhicule dans la direction de la translation un rail additionnel (63) positionné dans un guidage additionnel (61) relié à la portière (10) peut être placé en un point fixe de la carrosserie, notamment sur le pare-chocs.

14. Dispositif servant à ouvrir et à fermer les portières d'un véhicule selon la revendication 13, caractérisé par le fait qu'un manchon sphérique sert de guidage additionnel et qu'un arbre creux sert, lui, de rail additionnel.

# Fig.1

EP 0 179 827 B1

# Fig. 2a

# Fig. 2b

Fig.3

EP 0 179 827 B1

a

31 14 13 17 18 24 10 25 23 26 30 59 28 29

b

31 14 13 17 18 25 24 23 26 30 59 10 29 28

Fig.4

c

31 14 13 17 18 25 24 23 26 30 59 28 29

d

14 31 25 24 26 30 59 28

13

17,18

23

29

10

# Fig. 4

# Fig.5a

Fig.5b

Fig.6